# EUROPÄISCHE PATENTSCHRIFT

(11) **EP 2 566 594 B1**
(45) Veröffentlichungstag und Bekanntmachung des Hinweises auf die Patenterteilung: **11.06.2014**
(21) Anmeldenummer: 11720034.5
(22) Anmeldetag: 03.05.2011
(51) Int. Cl.: B01D 3/16, B01D 3/22

(54) **VENTILBODEN**
VALVE TRAY
PLATEAU À CLAPETS

(30) Priorität: 04.05.2010 DE 102010019263
(43) Veröffentlichungstag der Anmeldung: 13.03.2013
(73) Patentinhaber: RVT Process Equipment GmbH, 96349 Steinwiesen (DE)
(72) Erfinder: LEHNER, Markus, 96364 Marktrodach (DE); WOLGAST, Andreas, 09337 Hohenstein-Ernstthal (DE); GERTLOFF, Andreas, 96342 Stockheim (DE)
(74) Vertreter: Grünecker, Kinkeldey, Stockmair & Schwanhäusser
(86) Internationale Anmeldenummer: PCT/EP2011/002210
(87) Internationale Veröffentlichungsnummer: WO 2011/138018

(56) Entgegenhaltungen:
- EP-A1- 1 880 749
- DE-A1- 2 352 177
- GB-A- 2 321 417
- US-A- 3 087 711
- US-A- 5 360 583
- US-A- 5 788 894
- US-A- 5 911 922
- US-B1- 6 588 736

## Beschreibung

Die vorliegende Erfindung betrifft einen Ventilboden für Stoffaustauschkolonnen mit einer Bodenplatte, mindestens einem Flüssigkeitszulauf und mindestens einem Flüssigkeitsablauf zur Ausbildung einer Flüssigkeitsströmung mit einer Strömungsrichtung auf der Bodenplatte, einer Mehrzahl von in der Bodenplatte ausgebildeten Gaseintrittsöffnungen sowie einer Mehrzahl von die Gaseintrittsöffnungen überdeckenden Festventilen, die einstückig mit der Bodenplatte ausgebildet sind und jeweils ein zur Bodenplatte beabstandetes Ventildach sowie eine Ventilhinterseite und eine Ventitstirnseite umfassen, wobei zwischen der Bodenplatte, der Ventilhinterseite, der Ventitstirnseite und dem Ventildach jedes Festventils jeweils mindestens eine seitliche Gasaustrittsöffnung ausgebildet ist.

Solche Ventilböden werden in Stoffaustauschkolonnen, beispielsweise Destillationskolonnen oder Absorptionskolonnen, als Gas-Flüssigkeits-Kontaktböden eingesetzt. In den Stoffaustauschkolonnen werden zwei Medien, üblicherweise ein Gas und eine Flüssigkeit, miteinander in Kontakt gebracht. Das Gas strömt dabei von unten nach oben durch die Kolonne, die Flüssigkeit strömt von oben nach unten durch die Kolonne. In der Kolonne sind die Böden waagerecht eingesetzt und dienen dazu, das Gas und die Flüssigkeit miteinander in Kontakt zu bringen. Auf jedem der Böden ist mindestens ein Flüssigkeitszulauf und mindestens ein Flüssigkeitsablauf vorgesehen. Die Flüssigkeit wird über den Flüssigkeitszulauf auf den jeweiligen Boden aufgegeben und strömt über den Boden zum Flüssigkeitsablauf. Von dort strömt die Flüssigkeit auf den darunter liegenden Boden. In jedem Boden sind ferner Gaseintrittsöffnungen vorgesehen, durch die das Gas von unten nach oben aufsteigt. Auf den Böden kommen das Gas und die Flüssigkeit miteinander in Kontakt. In einer sehr einfachen Bauform können die Böden als Siebböden ausgebildet sein. In diesem Fall sind in den Böden lediglich Öffnungen vorgesehen, durch die das Gas nach oben steigt. Ist der Gasstrom zu gering, so tritt das Problem des Durchregnens auf und die Flüssigkeit strömt durch die Öffnungen in den Böden direkt nach unten.

Es ist daher auch bekannt, Ventilböden einzusetzen. In diesem Fall sind die Gaseintrittsöffnungen in den Böden durch brückenförmige Ventile abgedeckt. Das aufsteigende Gas strömt durch Gasaustrittsöffnungen seitlich aus den Ventilen aus. Die Ventile können beweglich ausbildet sein, so dass die Ventile je nach durchströmender Gasmenge unterschiedlich weit aufgedrückt werden. In diesem Fall ist die Gasaustrittsfläche der Ventile einstellbar.

Es ist aber auch bekannt, Festventile in den Bodenplatten auszubilden. In diesem Fall sind die Ventile fest mit der Bodenplatte verbunden, die Gasaustrittsfläche kann nicht verändert werden. Die Festventile können unterschiedlichste Form aufweisen und sind üblicherweise sehr einfach herstellbar, beispielsweise durch Stanzen. Dazu wird der Umfang der Gaseintrittsöffnungen teilweise ausgeschnitten und das Material, das in den Gaseintrittsöffnungen angeordnet ist, nach oben gedrückt. Über die nicht ausgeschnittenen Umfangsbereiche bleibt das Material mit der Bodenplatte verbunden. Dadurch werden seitliche Gasaustrittsöffnungen zwischen der Bodenplatte und den Festventilen ausgebildet, die üblicherweise im Wesentlichen senkrecht zur Bodenplatte verlaufen.

Ein Ventilboden mit Festventilen ist beispielsweise in der US 5,788,894 beschrieben. Der Ventilboden umfasst eine Bodenplatte, in der rechteckige Gaseintrittsöffnungen in unterschiedlichen Ausrichtungen so angeordnet sind, dass die Längsachsen der Gaseintrittsöffnungen sowohl parallel als auch senkrecht zur Fließrichtung der Flüssigkeit verlaufen. Die über den Gaseintrittsöffnungen angeordneten Ventile weisen je ein Ventildach sowie zwei Endplatten auf. Das Ventildach ist beabstandet zur Bodenplatte angeordnet und über die Endplatten mit der Bodenplatte verbunden, so dass seitliche Gasaustrittsöffnungen ausgebildet werden. Die Ventile können unterschiedliche Form aufweisen. So ist es zum einen bekannt, dass das Ventildach parallel zur Bodenplatte verläuft, so dass zwei identische trapezförmige seitliche Gasaustrittsöffnungen je Ventil ausgebildet werden, die identische Gasmengen abgeben. Es ist auch gezeigt, dass das Ventildach um die Längsachse der Gaseintrittsöffnung geneigt ist, so dass die seitlichen Gasaustrittsöffnungen unterschiedlich groß sind. Durch die beiden seitlichen Gasaustrittsöffnungen strömen daher unterschiedliche Gasmengen aus. Im Extremfall ist das Ventildach so stark geneigt, dass nur eine seitliche Gasaustrittsöffnung ausgebildet ist und die andere Seite des Ventildachs direkt mit der Bodenplatte verbunden ist. Ferner ist auch gezeigt, dass das Ventildach in Längsrichtung der Gaseintrittsöffnung geneigt ist. Auch hier werden identische seitliche Gasaustrittsöffnungen ausgebildet, wobei die Höhe der Gasaustrittsöffnungen in Strömungsrichtung zunimmt. Die unterschiedlich ausgebildeten Ventile werden so auf dem Boden angeordnet, dass eine gleichmäßige Flüssigkeitsströmung über die aktive Fläche des Bodens erzeugt wird und die Flüssigkeit in Richtung des Ablaufs gelenkt wird.

Ein weiterer Ventilboden mit Festventilen ist in der DE 23 52 177 A1 gezeigt. Auf dem Ventilboden sind unterschiedliche Arten von Festventilen angeordnet, solche, die Begasungsöffnungen ausbilden und solche, die zwangsführende Öffnungen ausbilden. Durch die Begasungsöffnungen strömt das Gas aus und wird mit der Flüssigkeit in Kontakt gebracht, durch die zwangsführenden Öffnungen strömt ebenfalls Gas aus und leitet die Flüssigkeit auf dem Ventilboden in die gewünschte Richtung.

Nachteilig an diesem Stand der Technik ist es allerdings, dass noch immer keine gleichmäßige Flüssigkeitsverteilung über den Boden erreicht wird.

Es ist daher die Aufgabe der vorliegenden Erfindung, die aus dem Stand der Technik bekannten Ventilböden mit Festventilen weiter zu verbessern und insbesondere eine gleichmäßige Flüssigkeitsverteilung über den Ventilboden zu erreichen.

Hierzu ist erfindungsgemäß vorgesehen, dass das Ventildach geneigt zur Bodenplatte ausgebildet ist, so dass sich die seitlichen Gasaustrittsöffnungen der Festventile in Strömungsrichtung der Flüssigkeitsströmung, d.h. in Richtung vom Flüssigkeitszulauf zum Flüssigkeitsablauf, verjüngen.

Die aus den seitlichen Gasaustrittsöffnungen ausströmende Gasmenge ist daher über die Ventillänge nicht konstant. Im in Strömungsrichtung hinteren Bereich der seitlichen Gasaustrittsöffnung tritt mehr Gas aus, als im in Strömungsrichtung vorderen Bereich. Die Impulsübertragung des ausströmenden Gases auf die Flüssigkeit resultiert so in einer Schubwirkung und treibt die Flüssigkeit in Richtung des Ablaufschachts, also des Flüssigkeitsablaufs, voran. Die Ventilgeometrie unterstützt stützt so die Funktionsweise des Ventilbodens.

Zwar ist aus der US 5,911,922 bereits ein Ventilboden mit brückenförmigen Ventilen mit je einem ersten Bein, einem zweiten Bein und einem die Beine verbindenden Dach bekannt, bei dem die Beine unterschiedlich lang sind, so dass das Dach in Strömungsrichtung der Flüssigkeit geneigt ist. Allerdings handelt es sich bei diesen Ventilen um bewegliche Ventile. Im Ventilboden sind kreisförmige Öffnungen ausgestanzt, die von in der Draufsicht trapezförmigen Ventilen abgedeckt sind. Die Beine der Ventile sind in Schlitzen im Ventilboden angeordnet und weisen je einen Anschlag auf. Die Anschläge legen die Endposition der Ventile fest. Die Ventile sind also nicht aus dem aus dem Ventilboden ausgestanzten Material ausgebildet. Strömt kein Gas durch den Ventilboden, so liegen die Ventile auf dem Boden auf. Im Betrieb des Ventilbodens strömt Gas von unten durch die kreisförmigen Öffnungen im Boden und drückt die Ventile nach oben. Dabei bewegen sich die Dächer der Ventile zunächst parallel zum Boden nach oben. Erst bei einem maximalen Gasstrom, wenn sich die Ventile in der Endposition befinden und die Anschläge der Beine an der Bodenplatte anliegen, nehmen die Dächer der Ventile die geneigte Position ein. Wird der Ventilboden mit geringerer Gasbelastung betrieben, so sind die Ventildächer nicht geneigt.

In einer bevorzugten Ausführungsform kann vorgesehen werden, dass die seitlichen Gasaustrittsöffnungen der Festventile in Form eines ungleichseitigen Vielecks, vorzugsweise eines ungleichseitigen Sechsecks, ausgebildet sind. Durch diese Ventilform wird das Durchregenverhalten und das Entrainment-Verhalten im Vergleich zu bisher verwendeten Festventilen verbessert. Die Ventilaußenseiten sind gerundet und weisen keine Kanten auf, so dass sie unempfindlich gegen Verschmutzungen sind.

In einer weiteren Ausführungsform kann vorgesehen werden, dass die Ventilstirnseiten und die Ventilhinterseiten der Festventile mittels Stegen mit der Bodenplatte verbunden sind, wobei sich die Stege ausgehend von der Bodenplatte im Wesentlichen vertikal nach oben erstrecken. Durch diese vertikalen Stege wird eine Umlenkung und Einschnürung des Gasstroms aus den Gasaustrittsöffnungen vermindert. Versuche haben gezeigt, dass dadurch ein niedriger Druckverlust realisiert werden kann.

Es kann ferner vorgesehen werden, dass die Ventilhinterseite und die Ventitstirnseite der Festventile mit einer durch die Bodenplatte aufgespannten Ebene jeweils einen Winkel von 20° bis 40°, vorzugsweise 26°, einschließen. Dadurch wird eine einfache Ausbildung der Festventile und die gewünschte gerundete Form erzielt, so dass die Ventilböden unempfindlich gegen Verschmutzungen, d. h. Fouling, sind.

Noch eine weitere Variante kann vorsehen, dass die Differenz der Höhe des Ventildachs an dem in Strömungsrichtung hinteren Ende und der Höhe des Ventildachs an dem in Strömungsrichtung vorderen Ende der Gasaustrittsöffnungen 1,5 mm bis 3 mm, vorzugsweise 2,1 mm, beträgt. Versuche haben gezeigt, dass in diesen Bereichen durch die Ventile die gewünschte Schubwirkung des Gases auf die Flüssigkeit erzielt wird.

Gemäß einer besonders bevorzugten Ausführungsform kann vorgesehen werden, dass die Gaseintrittsöffnungen in der Bodenplatte sowie die Festventile in der Draufsicht im Wesentlichen rechteckig ausgebildet sind. Dadurch wird eine sehr einfache Ausbildung der Festventile ermöglicht.

Vorzugsweise kann die Länge der Gaseintrittsöffnungen im Bereich von 41 mm bis 45 mm liegen und die lichte Breite der Gaseintrittsöffnungen etwa 19 mm betragen. Dadurch kann der Druckverlust reduziert werden.

Noch eine weitere Ausführungsform kann vorsehen, dass das Öffnungsverhältnis des Ventilbodens, d.h. die Summe der seitlichen Gasaustrittsflächen aller Ventile einer Ventilplatte, bezogen auf die aktive Bodenfläche, 6 bis 15,5 % beträgt. Das Öffnungsverhältnis entspricht der Summe der seitlichen Gasaustrittsflächen aller Ventile einer Ventilplatte, bezogen auf die aktive Bodenfläche. Die aktive Bodenfläche ist die Fläche des Bodens, in der der Gas-Flüssigkeits-Kontakt stattfindet. Erreicht wird das gewünschte Öffnungsverhältnis durch Ventilteilungen im Bereich von 60 x 86 mm bis 60 x 145 mm. Unter Ventilteilungen ist der Abstand der Mittelpunkte der Gaseintrittsöffnungen in der Bodenplatte zu verstehen. Durch das oben angegebene Öffnungsverhältnis kann der Druckverlust in den gewünschten Grenzen gehalten werden, zugleich ist das Durchregenverhalten zufriedenstellend.

Um eine besonders einfache Ausbildung zu ermöglichen, kann vorgesehen werden, dass die Längsachse der Gaseintrittsöffnungen parallel zur Strömungsrichtung verläuft.

Im Folgenden wird die Erfindung anhand von Zeichnungen näher beschrieben. Es zeigen:
- Fig. 1: Draufsicht auf einen Ausschnitt aus einem erfindungsgemäßen Ventilboden,
- Fig. 2: perspektivische Darstellung eines Festventils des Ventilbodens aus Fig. 1 von oben,
- Fig. 3: perspektivische Darstellung eines Festventils des Ventilbodens aus Fig. 1 von unten,
- Fig. 4: Seitenansicht einer ersten Ausführungsform der Festventile und
- Fig. 5: Seitenansicht einer zweiten Ausführungsform der Festventile.

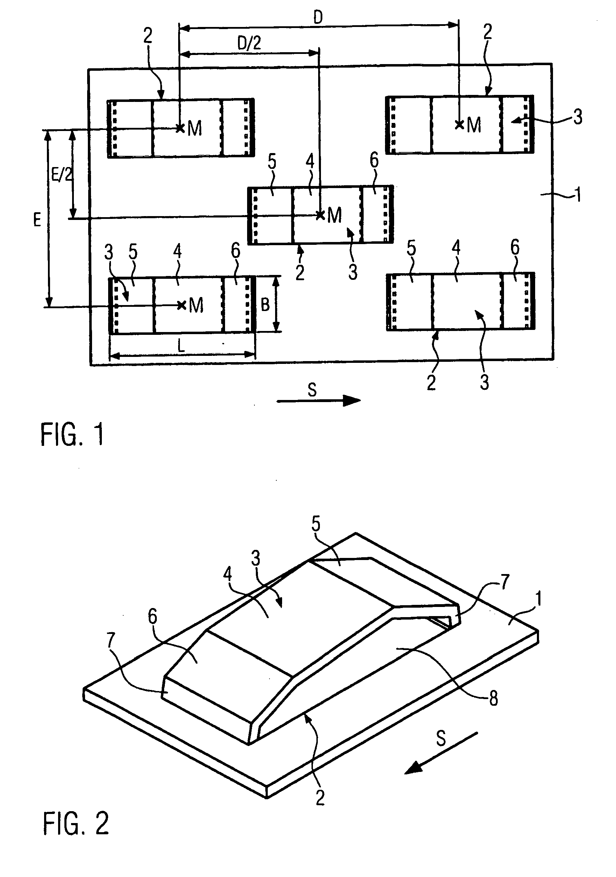

Fig. 1 zeigt einen Ausschnitt aus einem erfindungsgemäßen Ventilboden von oben. Der Ventilboden umfasst eine Bodenplatte 1, auf der ein Flüssigkeitszulauf und ein Flüssigkeitsablauf ausgebildet sind. Ist der Ventilboden in einer Kolonne angeordnet, so strömt Flüssigkeit von einem darüber liegenden Ventilboden über den Flüssigkeitszulauf auf die Bodenplatte 1 und auf der Bodenplatte 1 zum Flüssigkeitsablauf. Vom Flüssigkeitsablauf fällt die Flüssigkeit auf einen darunter liegenden Ventilboden. Auf der Bodenplatte 1 bildet sich daher im Betrieb eine Flüssigkeitsströmung mit der Strömungsrichtung S aus (siehe Pfeil). In der Bodenplatte 1 sind Gaseintrittsöffnungen 2 ausgebildet, die von brückenförmigen Festventilen 3 überdeckt sind. Die Gaseintrittsöffnungen 2 sind rechteckig ausgebildet und weisen eine Länge L und eine Breite B auf, wobei die Länge L größer ist als die Breite B. Vorzugsweise beträgt die Länge L etwa 41 mm bis 45 mm, die Breite B etwa 19 mm. Die Festventile 3 umfassen je ein Ventildach 4, eine Ventilhinterseite 5 und eine Ventitstirnseite 6. Die Ventilhinterseite 5 verbindet das in Strömungsrichtung S hintere Ende des Ventildachs 4 mit der Bodenplatte 1. Die Ventitstirnseite 6 verbindet das in Strömungsrichtung S vorne gelegene Ende des Ventildachs 4 mit der Bodenplatte 1.

Die Gaseintrittsöffnungen 2 und somit auch die Festventile 3 sind auf der Bodenplatte 1 hintereinander in parallelen Reihen angeordnet. Die Längsachsen der Gaseintrittsöffnungen 2 verlaufen parallel zur Strömungsrichtung S. Die Gaseintrittsöffnungen 2 und somit auch die Festventile 3 in einer Reihe sind beabstandet zueinander angeordnet, wobei die Mittelpunkte M der Gaseintrittsöffnungen 2 einer Reihe einen Abstand D von etwa 86 mm bis 145 mm zueinander aufweisen. Die Gaseintrittsöffnungen 2 zweier benachbarter Reihen sind jeweils versetzt zueinander angeordnet. Die Gaseintrittsöffnungen 2 und somit auch die Festventile 3 jeder zweiten Reihen liegen somit genau zwischen den Gaseintrittsöffnungen 2 bzw. den Festventilen 3 jeder ersten Reihe. Somit liegen die Gaseintrittsöffnungen 2 jeder ersten und dritten bzw. jeder zweiten und vierten Reihe in Strömungsrichtung S auf gleicher Höhe. Der Abstand E der Mittelpunkte M der Gaseintrittsöffnungen 2 jeder zweiten Reihe quer zur Strömungsrichtung S beträgt vorzugsweise 60 mm. Die Ventilteilung des Ventilbodens liegt daher in einem Bereich von 60 mm x 86 mm bis 60 mm x 145 mm.

Fig. 2 zeigt eine perspektivische Ansicht eines Festventils 3 der Bodenplatte 1 von oben. Der Pfeil gibt die Strömungsrichtung S der Flüssigkeitsströmung auf der Bodenplatte 1 an. In der Bodenplatte 1 ist die rechteckige Gaseintrittsöffnung 2 ausgebildet, die in Fig. 2 nur teilweise zu sehen ist. Die Gaseintrittsöffnung 2 wird von dem brückenförmigen Festventil 3 überdeckt. Das Festventil 3 ist in der Draufsicht ebenfalls im Wesentlichen rechteckig. Das Festventil 3 umfasst ein Ventildach 4, das beabstandet zur Bodenplatte 1 angeordnet ist. An seiner in Strömungsrichtung S hinteren Schmalseite ist das Ventildach 4 mit der Ventilhinterseite 5 verbunden. An die Ventilhinterseite 5 schließt sich ein Steg 7 an, der die Ventilhinterseite 5 mit der Bodenplatte 1 verbindet. An der in Strömungsrichtung S vorderen Schmalseite des Ventildachs 4 schließt die Ventitstirnseite 6 an. Die Ventitstirnseite 6 ist ebenfalls über einen Steg 7 mit der Bodenplatte 1 verbunden. Das Festventil 3 ist somit einstückig mit der Bodenplatte 1 ausgebildet. Die Stege 7 ragen im Wesentlichen senkrecht von der Bodenplatte 1 nach oben. Sowohl die Ventilhinterseite 5 als auch die Ventitstirnseite 6 sind geneigt zur Bodenplatte ausgebildet und schließen mit einer parallel zur Bodenplatte 1 verlaufenden Ebene einen spitzen Winkel ein. Die Ventitstirnseite 6 ist kürzer als die Ventilhinterseite 5. Somit ist auch das Ventildach 4 geneigt zur Bodenplatte 1 ausgebildet. Das Ventildach 4 ist somit um die Querachse der Gaseintrittsöffnung 2 geneigt. Um die Längsachse der Gaseintrittsöffnung 2 weist das Ventildach 4 keine Neigung auf.

Da das Festventil 3 die Gaseintrittsöffnung 2 brückenförmig überragt, sind an beiden Längsseiten des Festventils 3 zwischen der Bodenplatte 1 und dem Festventil 3, d. h. den Stegen 7, der Ventitstirnseite 6, dem Ventildach 4 und der Ventilhinterseite 5, seitliche Gasaustrittsöffnungen 8 ausgebildet. Die Gasaustrittsöffnungen 8 verjüngen sich in Strömungsrichtung S. In dem in Fig. 2 dargestellten Beispiel weisen die Gasaustrittsöffnungen 8 die Form eines ungleichseitigen Sechsecks auf. Das Festventil 3 ist bogenförmig bzw. gerundet ausgebildet, so dass die Gefahr von Verschmutzungen bzw. Fouling vermindert wird.

Wie oben beschrieben, ist das Ventildach 4 an der in Strömungsrichtung S hinteren Schmalseite mittels der Ventilhinterseite 5 und dem Steg 7 mit der Bodenplatte 1 verbunden. Da die Ventilhinterseite 5 mit der Bodenplatte 1 einen spitzen Winkel einschließt, vergrößert sich die seitliche Gasaustrittsöffnung 8 in diesem Bereich zunächst. Ab dem Punkt, an dem die Ventilhinterseite 5 in das Ventildach 4 übergeht, tritt die Verjüngung der seitlichen Gasaustrittsöffnungen 8 ein. Im Bereich der Ventitstirnseite 6 nimmt die Verjüngung deutlich zu. Im in Strömungsrichtung S hinteren Bereich der seitlichen Gasaustrittsöffnungen 8 tritt daher mehr Gas aus, als im in Strömungsrichtung S vorderen Bereich der seitlichen Gasaustrittsöffnungen 8 und es kann insgesamt von einer Verjüngung der seitlichen Gasaustrittsöffnungen 8 gesprochen werden.

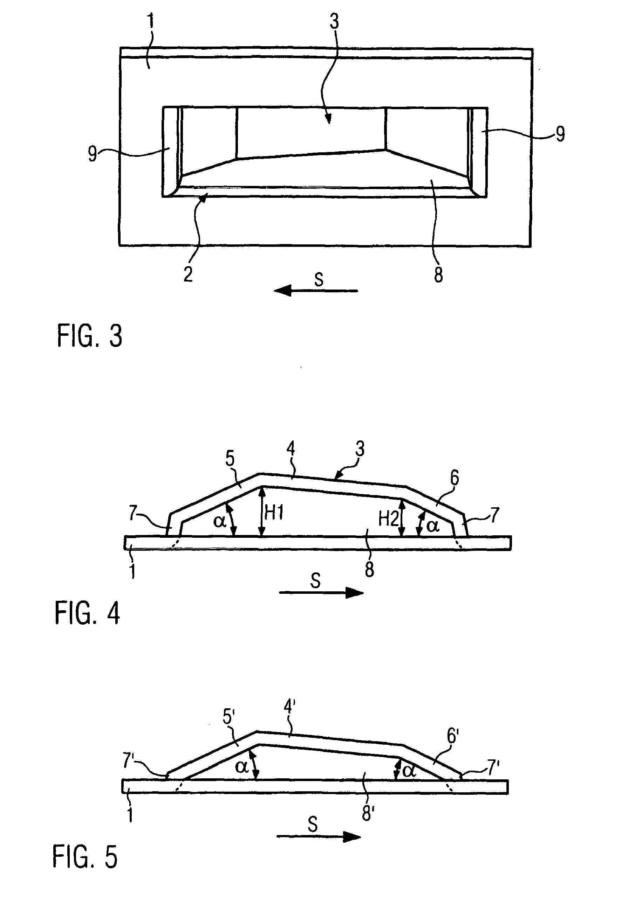

Fig. 3 zeigt eine perspektivische Darstellung eines Festventils 3 von unten. Die in der Bodenplatte 1 ausgebildete Gaseintrittsöffnung 2 ist deutlich zu erkennen. Die Gaseintrittsöffnung 2 wird von dem brückenförmigen Festventil 3 überdeckt, das im Wesentlichen symmetrisch zur Längsachse der Gaseintrittsöffnung 2 ausgebildet ist. Im Betrieb der Kolonnen mit den darin angeordneten Ventilböden strömt Flüssigkeit auf der Oberseite der Bodenplatte 1 entlang. Gas strömt von unten nach oben durch die Kolonne, tritt durch die Gaseintrittsöffnungen 2 der Bodenplatte 1 in den Ventilboden ein und wird durch das Festventil 3 in seitlicher Richtung umgelenkt, so dass es durch die beiden seitlichen Gasaustrittsöffnungen 8 an der Oberseite der Bodenplatte 1 austritt und mit der dort strömenden Flüssigkeit in Kontakt gebracht wird. Da sich die Gasaustrittsöffnungen 8 in Strömungsrichtung S verjüngen, tritt an dem in Strömungsrichtung S hinteren Bereich der Gasaustrittsöffnungen 8 eine größere Gasmenge aus als an dem in Strömungsrichtung S gelegenen vorderen Bereich der Gasaustrittsöffnungen 8. Die Impulsübertragung des ausströmenden Gases auf die Flüssigkeit resultiert so in einer Schubwirkung, die die Flüssigkeit in Richtung des Flüssigkeitsablaufs und somit in Strömungsrichtung S voran treibt. Diese Schubwirkung wurde in Versuchen bewiesen und kann beispielsweise in Videosequenzen dargestellt werden. Durch diese Schubwirkung kann der Arbeitsbereich der Ventilböden erhöht werden. Die erfindungsgemäßen Ventilböden können daher auch mit hohen Gasbelastungen und geringen bis mittleren Flüssigkeitsbelastungen problemlos betrieben werden.

Wie in Fig. 3 deutlich zu sehen, ist das Festventil 3 einstückig mit der Bodenplatte 1 ausgebildet. Der Übergang 9 von der Bodenplatte 1 zum Festventil 3 ist gerundet ausgebildet, so dass die Gefahr der Ausbildung von Verschmutzungen in den Festventilen verringert wird. Vorzugsweise werden die Festventile 3 hergestellt, indem die Längsseiten L der Gaseintrittsöffnung 2 in der Bodenplatte ausgestanzt werden und dass in den Gaseintrittsöffnungen 2 befindliche Material mittels des Stempels nach oben geschoben wird. Durch eine geeignete Stempelform wird die gewünschte Ventilform erreicht. Die Schmalseiten B der Gaseintrittsöffnungen werden nicht ausgeschnitten, so dass hier das Material mit der Bodenplatte 1 verbunden bleibt.

Fig. 4 zeigt eine Seitenansicht des Festventils 3. Wie bereits beschrieben, überdeckt das Festventil 3 die Gaseintrittsöffnung 2 in der Bodenplatte 1 brückenförmig, so dass seitliche Gasaustrittsöffnungen 8 ausgebildet werden. Da das Festventil 3 symmetrisch zur Längsachse L der Gaseintrittsöffnungen 2 ausgebildet ist, werden zwei identische seitliche Gasaustrittsöffnungen 8 ausgebildet. Die Unterkante der Gasaustrittsöffnung 8 wird durch die Bodenplatte 1 gebildet. An die Bodenplatte 1 schließen an die beiden Schmalseiten der Gaseintrittsöffnung 2 die Stege 7 an, die sich nahezu vertikal nach oben erstrecken. Durch diese Stege 7 wird die Umlenkung und Einschnürung des Gasstroms vermindert, was zu einem geringeren Druckverlust als bei herkömmlichen Festventilen führt.

Je nach Anwendungsfall bzw. gewünschtem Gasdurchsatz sollten die Gasaustrittsöffnungen 8 eine unterschiedliche Größe aufweisen. Dies kann dadurch erreicht werden, dass die Länge der Stege 7 an den jeweiligen Anwendungsfall angepasst wird. An die Stege 7 schließen sich die Ventilhinterseite 5 bzw. die Ventitstirnseite 6 an. Der Anstellwinkel α der Ventilstirnseite 6 und der Ventilhinterseite 5 zur Waagerechten ist vorzugsweise identisch und liegt in einem Bereich von 20° bis 40°. Vorzugsweise beträgt der Anstellwinkel α 26°. Die Ventilhinterseite 5 und die Ventitstirnseite 6 sind über das Ventildach 4 miteinander verbunden. Da die Ventitstirnseite 6 kürzer ist als die Ventilhinterseite 5 ist das Ventildach 4 geneigt zur Bodenplatte 1 ausgebildet. Die Gasaustrittsöffnung 8 verjüngt sich also in Strömungsrichtung S.

Wie oben beschrieben, ist das Ventildach 4 an der in Strömungsrichtung S hinteren Schmalseite mittels der Ventilhinterseite 5 und dem Steg 7 mit der Bodenplatte 1 verbunden. Da die Ventilhinterseite 5 mit der Bodenplatte 1 einen spitzen Winkel einschließt, vergrößert sich die seitliche Gasaustrittsöffnung 8 in diesem Bereich zunächst. Ab dem Punkt, an dem die Ventilhinterseite 5 in das Ventildach 4 übergeht, tritt die Verjüngung der seitlichen Gasaustrittsöffnungen 8 ein. Im Bereich der Ventitstirnseite 6 nimmt die Verjüngung deutlich zu. Im in Strömungsrichtung S hinteren Bereich der seitlichen Gasaustrittsöffnungen 8 tritt daher mehr Gas aus, als im in Strömungsrichtung S vorderen Bereich der seitlichen Gasaustrittsöffnungen 8 und es kann insgesamt von einer Verjüngung der seitlichen Gasaustrittsöffnungen 8 gesprochen werden. Die oben beschriebene Schubwirkung auf die Flüssigkeit wird erreicht.

In dem in Fig. 4 gezeigten Ausführungsbeispiel weist die seitliche Gasaustrittsöffnung 8 die Form eines ungleichseitigen Sechsecks auf. Die Differenz der Höhe H1 des Ventildachs 4 an dem in Strömungsrichtung S hinteren Ende und der Höhe H2 des Ventildachs 4 dem in Strömungsrichtung S vorderen Ende des Ventildachs 4 liegt in einem Bereich von 1,5 mm bis 3 mm und beträgt vorzugsweise 2,1 mm. Dadurch erhält die seitliche Gasaustrittsöffnung 8 die gewünschte Form, so dass das durch die Gasaustrittsöffnungen 8 ausströmende Gas die gewünschte Schubwirkung auf die Flüssigkeit erzeugt.

Fig. 5 zeigt eine Ansicht einer weiteren Ausführungsform eines Festventils 3'. Im Folgenden werden nur die Unterschiede zum bereits beschriebenen Festventil 3 aufgeführt. In diesem Fall sind die sich von der Bodenplatte 1 nach oben ersteckenden Stege 7' deutlich verkürzt ausgebildet. Somit ist auch die Fläche der seitlichen Gasaustrittsöffnungen 8' geringer. Die Ventilhinterseite 5', die Ventitstirnseite 6' und das Ventildach 4' sind im Wesentlichen identisch zur ersten Ausführungsform ausgebildet. Um die Fläche der seitlichen Gasaustrittsöffnungen 8' weiter zu reduzieren, kann zudem die Unterkante der seitlichen Gasaustrittsöffnungen 8' verkürzt sein.

Vorzugsweise sind die Stege 7, 7' nicht senkrecht zur Bodenplatte angeordnet, sondern schließen mit der Bodenplatte einen Winkel im Bereich von 70° bis 90°, vorzugsweise 80°, ein. Somit kann die Länge der Unterkante der Gasaustrittsöffnungen 8, 8' durch Änderung der Länge der Stege 7, 7' variiert werden. Je nach Anwendungsfall werden daher seitliche Gasaustrittsöffnungen mit der gewünschten Fläche hergestellt. Dies kann einfach dadurch ermöglicht werden, dass beim Stanzen der Hub des Stempels so eingestellt wird, das die Stege 7, 7' die gewünschte Länge erhalten. Die Fläche der seitlichen Gasaustrittsöffnungen liegt vorzugsweise in einem Bereich von 152 mm² bis 262 mm².

Mit der obengenannten Ventilteilung beträgt das Öffnungsverhältnis des Ventilbodens etwa 6 bis 15,5 %. Als Öffnungsverhältnis ist hier die Summe der seitlichen Gasaustrittsöffnungen aller Festventile auf einem Ventilboden, bezogen auf die aktive Bodenfläche, bezeichnet. Die aktive Bodenfläche ist die Fläche des Ventilbodens, in der der Kontakt zwischen Gas und Flüssigkeit stattfindet.

Durch die besondere geometrische Ausgestaltung des Festventils und der seitlichen Gasaustrittsöffnungen sind sowohl das Durchregenverhalten als auch das Entrainment-Verhalten gegenüber bisher in Verwendung befindlichen Festventilen deutlich günstiger.

Da die äußere Geometrie des Festventils rund, glatt und ohne Kanten ausgeführt ist, ist es besonders unempfindlich gegenüber Verschmutzungen.

## Patentansprüche

1. Ventilboden für Stoffaustauschkolonnen mit einer Bodenplatte (1), mindestens einem Flüssigkeitszulauf und mindestens einem Flüssigkeitsablauf zur Ausbildung einer Flüssigkeitsströmung mit einer Strömungsrichtung (S) auf der Bodenplatte (1), einer Mehrzahl von in der Bodenplatte (1) ausgebildeten Gaseintrittsöffnungen (2), sowie einer Mehrzahl von die Gaseintrittsöffnungen (2) überdeckenden Festventilen (3), die einstückig mit der Bodenplatte (1) ausgebildet sind und jeweils ein zur Bodenplatte (1) beabstandetes Ventildach (4) sowie eine Ventilhinterseite (5) und eine Ventitstirnseite (6) umfassen, wobei zwischen der Bodenplatte (1), der Ventilhinterseite (5), der Ventilstirnseite (6) und dem Ventildach (4) jedes Festventil (3) jeweils mindestens eine seitliche Gasaustrittsöffnung (8) ausgebildet ist, **dadurch gekennzeichnet, dass** das Ventildach (4) geneigt zur Bodenplatte (1) ausgebildet ist, so dass sich die seitlichen Gasaustrittsöffnungen (8) der Festventile (3) in Strömungsrichtung (S) der Flüssigkeitsströmung, d.h. in Richtung vom Flüssigkeitszulauf zum Flüssigkeitsablauf, verjüngen.

2. Ventilboden nach Anspruch 1, **dadurch gekennzeichnet, dass** die seitlichen Gasaustrittsöffnungen (8) der Festventile (3) die Form eines ungleichseitigen Vielecks, vorzugsweise eines ungleichseitigen Sechsecks, aufweisen.

3. Ventilboden nach einem der Ansprüche 1 oder 2, **dadurch gekennzeichnet, dass** die Ventilstirnseiten (6) und die Ventilhinterseiten (5) der Festventile (3) mittels Stegen (7) mit der Bodenplatte (1) verbunden sind, wobei sich die Stege (7) ausgehend von der Bodenplatte (1) im Wesentlichen vertikal nach oben erstrecken.

4. Ventilboden nach einem der Ansprüche 1 bis 3, **dadurch gekennzeichnet, dass** die Ventilhinterseiten (5) und die Ventilstirnseiten (6) der Festventile (3) mit einer durch die Bodenplatte (1) aufgespannten Ebene einen Winkel von etwa 20° bis 40°, vorzugsweise 26°, einschließen.

5. Ventilboden nach einem der Ansprüche 1 bis 4, **dadurch gekennzeichnet, dass** die Differenz der Höhe (H1) des Ventildachs (4) an dem in Strömungsrichtung (S) hinteren Ende und der Höhe (H2) des Ventildachs (4) an dem in Strömungsrichtung (S) vorderen Ende der Gasaustrittsöffnungen (8) 1,5 mm bis 3 mm, vorzugsweise 2,1 mm, beträgt.

6. Ventilboden nach einem der Ansprüche 1 bis 5, **dadurch gekennzeichnet, dass** die Gaseintrittsöffnungen (2) in der Bodenplatte (1) sowie die Festventile (3) in der Draufsicht im Wesentlichen rechteckig ausgebildet sind.

7. Ventilboden nach Anspruch 6, **dadurch gekennzeichnet, dass** die Länge (L) der Gaseintrittsöffnungen (2) im Bereich von 41 mm bis 45 mm liegt und die lichte Breite (B) der Gaseintrittsöffnungen (2) etwa 19 mm beträgt.

8. Ventilboden nach einem der Ansprüche 1 bis 7, **dadurch gekennzeichnet, dass** das Öffnungsverhältnis des Ventilbodens, d.h. die Summe der seitlichen Gasaustrittsflächen aller Ventile einer Ventilplatte, bezogen auf die aktive Bodenfläche, 6% bis 15,5 % beträgt.

9. Ventilboden nach einem der Ansprüche 1 bis 8, **dadurch gekennzeichnet, dass** die Längsachsen der Gaseintrittsöffnungen (2) parallel zur Strömungsrichtung (S) verlaufen.

## Claims

1. Valve tray for mass transfer columns having a base plate (1), at least one liquid intake and at least one liquid outlet for forming a liquid flow having a direction of flow (S) on the base plate (1), a plurality of gas entry orifices (2) formed in the base plate (1) and a plurality of fixed valves (3) covering the gas entry orifices (2), which fixed valves are formed in one piece with the base plate (1) and in each case comprise a valve roof (4) at a distance to the base plate (1) and a valve rear side (5) and a valve front side (6), wherein, between the base plate (1), the valve rear side (5), the valve front side (6) and the valve roof (4) of each fixed valve (3), at least one side gas outlet orifice (8) is formed in each case, **characterized in that** the valve roof (4) is inclined towards the base plate (1), so that the side gas outlet orifices (8) of the fixed valves (3) taper in the direction of flow (S) of the liquid flow, i. e. in the direction from the liquid intake to the liquid outlet.

2. Valve tray according to claim 1, **characterized in that** the side gas outlet orifices (8) of the fixed valves (3) have the shape of an inequilateral polygon, preferably an inequilateral hexagon.

3. Valve tray according to one of claims 1 or 2, **characterized in that** the valve front sides (6) and the valve rear sides (5) of the fixed valves (3) are connected to the base plate (1) by means of webs (7), the webs (7) extending essentially vertically to the top, starting from the base plate (1).

4. Valve tray according to one of claims 1 to 3, **characterized in that** the valve rear sides (5) and the valve front sides (6) of the fixed valves (3) include an angle of about 20° to 40°, preferably 26° together with a plane spanned by the base plate (1).

5. Valve tray according to one of claims 1 to 4, **characterized in that** the difference between the height (H1) of the valve roof (4) at the rear end, seen in the direction of flow (S), and the height (H2) of the valve roof (4) at the front end of the gas outlet orifices (8), seen in the direction of flow (S), is 1.5 mm to 3 mm, preferably 2.1 mm.

6. Valve tray according to one of claims 1 to 5, **characterized in that** the gas entry orifices (2) in the base plate (1) and the fixed valves (3) are formed to be essentially rectangular in the plan view.

7. Valve tray according to claim 6, **characterized in that** the length (L) of the gas entry orifices (2) is within a range of 41 mm to 45 mm, and the clear width (B) of the gas entry orifices (2) is about 19 mm.

8. Valve tray according to one of claims 1 to 7, **characterized in that** the opening ratio of the valve tray, i. e. the sum of the side gas outlet areas of all valves of a valve plate based on the active base area, is 6 % to 15.5 %.

9. Valve tray according to one of claims 1 to 8, **characterized in that** the longitudinal axes of the gas entry orifices (2) extend in parallel to the direction of flow (S).

## Revendications

1. Plateau à clapets pour colonnes d'échange de substances, comprenant une plaque de plateau (1), au moins une arrivée de liquide et au moins une évacuation de liquide en vue de créer un écoulement de liquide avec une direction d'écoulement (S) sur la plaque de plateau (1), une pluralité d'ouvertures d'entrée de gaz (2) réalisées dans la plaque de plateau (1), ainsi qu'une pluralité de clapets fixes (3) recouvrant les ouvertures d'entrée de gaz (2), qui sont réalisés d'un seul tenant avec la plaque de plateau (1) et présentent chacun un toit de clapet (4) distant de la plaque de plateau (1) ainsi qu'un côté arrière de clapet (5) et un côté avant de clapet (6), au moins une ouverture de sortie de gaz latérale (8) étant formée respectivement entre la plaque de plateau (1), le côté arrière de clapet (5), le côté avant de clapet (6) et le toit de clapet (4) de chaque clapet fixe (3),
**caractérisé en ce que** le toit de clapet (4) est réalisé de manière inclinée par rapport à la plaque de plateau (1) de façon à ce que les ouvertures de sortie de gaz latérales (8) des clapets fixes (3) se rétrécissent dans la direction d'écoulement (S) de l'écoulement de liquide, c'est-à-dire dans la direction de l'arrivée de liquide vers l'évacuation de liquide.

2. Plateau à clapets selon la revendication 1, **caractérisé en ce que** les ouvertures de sortie de gaz latérales (8) des clapets fixes (3) présentent la forme d'un polygone irrégulier, de préférence d'un hexagone irrégulier.

3. Plateau à clapets selon l'une des revendications 1 ou 2, **caractérisé en ce que** les côtés avant de clapet (6) et les côtés arrière de clapet (5) des clapets fixes (3) sont reliés au moyen de nervures (7) à la plaque de plateau (1), les nervures (7) s'étendant, à partir de la plaque de plateau (1), sensiblement verticalement vers le haut.

4. Plateau à clapets selon l'une des revendications 1 à 3, **caractérisé en ce que** les côtés arrière de clapet (5) et les côtés avant de clapet (6) des clapets fixes (3) forment, avec un plan défini par la plaque de plateau (1), un angle d'environ 20° à 40°, de préférence de 26°.

5. Plateau à clapets selon l'une des revendications 1 à 4, **caractérisé en ce que** la différence de la hauteur (H1) du toit de clapet (4) au niveau de l'extrémité arrière des ouvertures de sortie de gaz (8), en se référant à la direction d'écoulement (S), et la hauteur (H2) du toit de clapet (4) au niveau de l'extrémité avant en se référant à la direction d'écoulement (S), est d'une valeur de 1,5 mm à 3 mm, de préférence de 2,1 mm.

6. Plateau à clapets selon l'une des revendications 1 à 5, **caractérisé en ce que** les ouvertures d'entrée de gaz (2) dans la plaque de plateau (1), ainsi que les clapets fixes (3), sont d'une configuration sensiblement rectangulaire en vue de dessus.

7. Plateau à clapets selon la revendication 6, **caractérisé en ce que** la longueur (L) des ouvertures d'entrée de gaz (2) se situe dans la plage de 41 mm à 45 mm, et la largeur d'ouverture libre (B) des ouvertures d'entrée de gaz (2) vaut environ 19 mm.

8. Plateau à clapets selon l'une des revendications 1 à 7, **caractérisé en ce que** la proportion d'ouverture du plateau à clapets, c'est-à-dire la somme des surfaces de sortie de gaz latérales, rapportée à la surface active du plateau, est de 6% à 15,5%.

9. Plateau à clapets selon l'une des revendications 1 à 8, **caractérisé en ce que** les axes longitudinaux des ouvertures d'entrée de gaz (2) s'étendent parallèlement à la direction d'écoulement (S).
